# EUROPEAN PATENT APPLICATION

(11) **EP 0 578 053 A1**
(43) Date of publication of application: **12.01.1994**
(21) Application number: 93110016.8
(22) Date of filing: 23.06.1993
(51) Int. Cl.: B60P 1/38, B60P 1/42, B60P 1/56, B60P 3/22, B60P 3/24

(54) **Tank truck for transporting loose material**

(30) Priority: 29.06.1992 IT MN920023
(71) Applicant: ALKOM ALLUMINIO S.r.l., I-37040 Arcole (Verona) (IT)
(72) Inventor: Castagnaro, Alberto, I-37047 S. Bonifacio (Prov. of Verona) (IT); Cortese, Paolo, I-37100 Verona (IT); Crestani, Graziano, I-37047 S. Bonifacio (Prov. of Verona) (IT); Preto Martini, Floriano, I-37047 S. Bonifacio (Prov. of Verona) (IT)
(74) Representative: Modiano, Guido, Dr.-Ing.

(57) **Abstract**

Tank truck for transporting loose material, including unloading means (8,9) located at the base of the tank proper (1) and adapted to convey the material to a lifting scroll (12) which feeds an articulated emptying arm (13); the unloading means further comprise at least one Redler chain (9,10) accommodated within a longitudinal channel (7,8) provided, in an upward region, with at least one gate (15) with modular closing action.

## Description

The present invention relates to a tank truck for transporting loose material.

It is known that tank trucks used for transporting loose materials, which quite often are constituted by floury or pelletized fodder, are provided with unloading means comprising material conveyance scrolls located at the base of the tank proper; said scrolls are sometimes arranged longitudinally and sometimes transversely, and draw the material from the inside of the tank in order to feed it to a lifting scroll which feeds an articulated emptying arm.

However, scrolls arranged at the base of the tank proper have some drawbacks, the first of which is that the pelletized material, by passing through them, is subject to breakages which negatively alter its quality.

Another disadvantage of known scrolls is slowness in operation, which leads to rather long times for unloading the tank, and the impossibility of performing adjustments tending to optimize the process.

The aim of the present invention is to provide a tank truck for transporting loose material which allows to unload the material without causing even the slightest alteration thereof regardless of its form of aggregation.

Within the scope of the proposed aim, an object of the present invention is to provide a tank truck, the unloading process whereof is particularly rapid and can be optimized by virtue of appropriate variations of operating parameters.

This aim and objects are achieved by a tank truck for transporting loose material, according to the present invention, comprising unloading means located at the base of the tank proper and adapted to convey the material to a lifting scroll which feeds an articulated emptying arm, characterized in that the unloading means located at the base comprise at least one Redler chain accommodated within a longitudinal channel provided, in an upward region, with at least one gate with modular closing action.

Advantageously, the tank truck according to the invention is characterized in that it comprises two Redler chains accommodated in longitudinal channels arranged side by side; said chains are adapted to convey the material to a plurality of scrolls arranged transversely at a head of the tank truck and feeding said lifting scroll.

Further characteristics and advantages of the present invention will become apparent from the description of a preferred but not exclusive embodiment thereof, illustrated only by way of non-limitative example in the accompanying drawings, wherein:

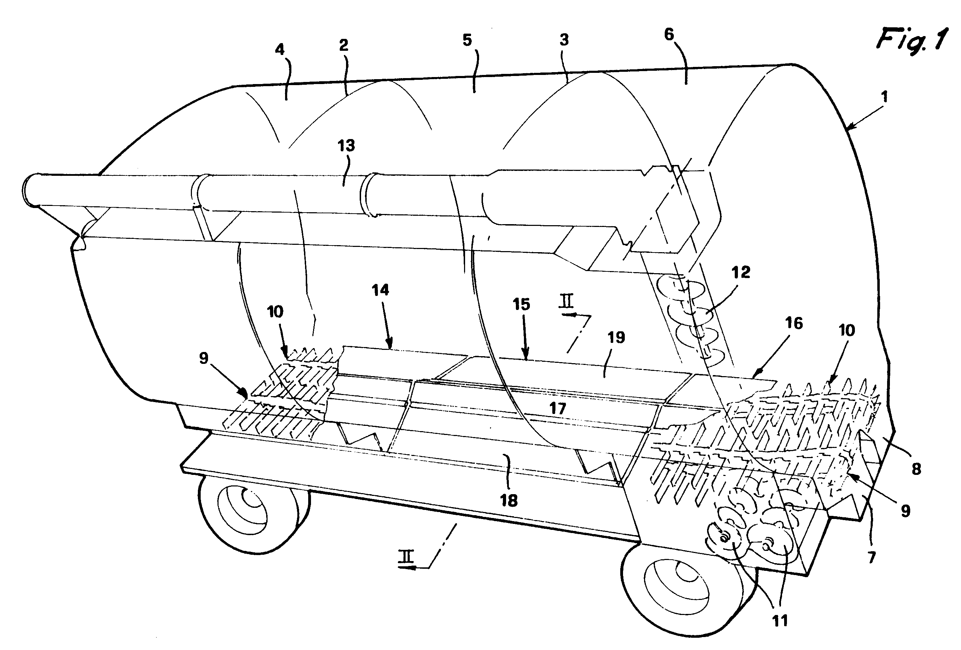

figure 1 is a perspective view of the tank truck according to the invention, with some elements shown in phantom lines;
figure 2 is a sectional view, taken along the plane II-II of figure 1.

With reference to the above figures, the reference numeral 1 generally designates the tank proper, which is mounted on a wheeled chassis and is divided into three chambers 4, 5 and 6 by means of the bulkheads 2 and 3.

The two per se known Redler chains 9 and 10 are provided at the base of the tank, i.e. substantially at the supporting chassis thereof, which is provided in a known manner with means, not shown in the figure, for loading the material to be transported; said chains are accommodated in the longitudinal channels 7 and 8 and are moved by virtue of known means, such as for example hydraulic motors, not shown in the figure.

At one head of the tank 1, below the Redler chains 9 and 10, there is the plurality of scrolls 11 arranged transversely to the container and adapted to receive the material conveyed by the chains 9 and 10 to convey it to the base of the lifting scroll 12, which feeds the articulated arm 13 for emptying the material from the tank, transferring it into appropriate containment means.

Within each of the chambers 4, 5 and 6, above the channels 7 and 8 for accommodating the Redler chains 9 and 10, there is a gate capable of moving from a position in which it fully closes the upper section of said channels to a position in which said section is open, passing in a stepless manner from one of these positions to the other, creating thereby the possibility of modular adjustment of the access of material to be unloaded to the Redler chains; the reference numerals 14, 15 and 16 respectively designate the gates related to the chambers 4, 5 and 6 respectively; the gate designated by the reference numeral 15 is now described in detail.

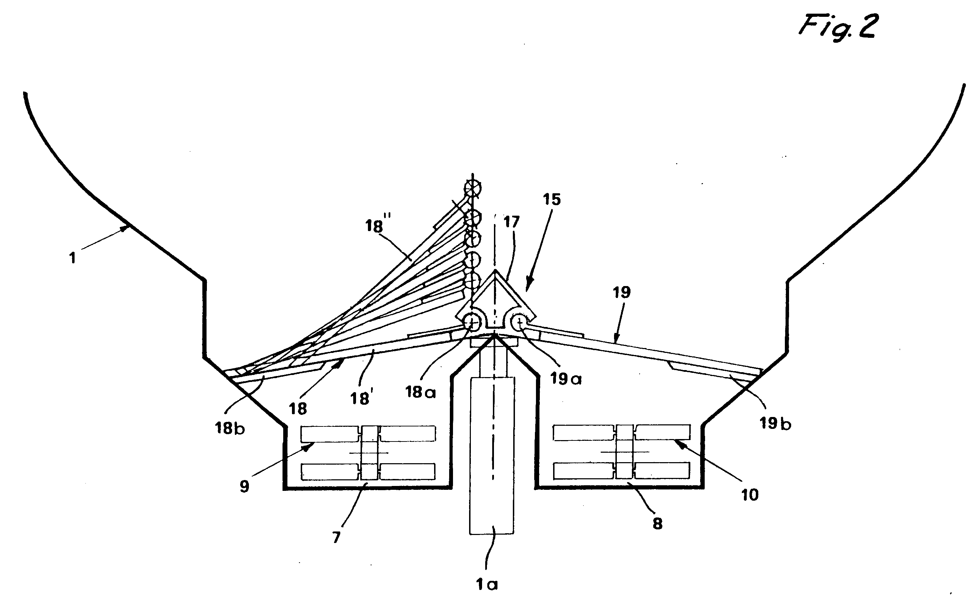

Said gate 15 thus comprises the bar 17 arranged at the longitudinal axis of the tank; the panels 18 and 19 are pivoted to said bar on opposite sides at 18a and 19a, and are supported by the guides 18b and 19b at their free end. Said bar is provided with means for moving in a direction orthogonal to the plane of the supporting chassis of the tank; said means include oleodynamic cylinders, such as 1a, by means of which said bar can move from its lower stroke limit position, in which the panels 18 and 19 are in contact with the walls of the tank 1, so as to fully block the access of the material contained in said tank to the channels 7 and 8 accommodating the Redler chains, to its upper stroke limit position, in which a wide opening for the access of the material to said channels is formed. This peculiarity is clearly illustrated in figure 2, which shows the panel 18 not only in its two extreme positions 18' and 18'' but also in various intermediate positions, and it is thus possible to observe that modular adjustment of the access of the material to the chains is achieved.

The tank truck according to the invention is therefore such that it allows to optimize its operating conditions by adjusting operating parameters such as the extent of gate opening and the speed of the Redler chains.

It should also be noted that the provision of Redler chains instead of the scrolls used in the known art ensures the handling of the material to be unloaded in such a manner that any alteration to the material is avoided.

The described tank truck according to the invention is susceptible to numerous modifications and variations, all of which are within the scope of the inventive concept; thus, for example, the Redler chains may be provided in a number different from the one described, and the gates may also assume any configuration; the material may furthermore be conveyed in any manner from when it is released by the Redler chains until it is emptied.

In the practical embodiment of the invention, all the details may be replaced with other technically equivalent elements; furthermore, the materials employed, as well as the shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Tank truck for transporting loose material, comprising unloading means located at the base of the tank proper and adapted to convey the material to a lifting scroll feeding an articulated emptying arm, characterized in that said unloading means located at the base comprise at least one Redler chain accommodated within a longitudinal channel provided, in an upward region, with at least one gate with modular closing action.

2. Tank truck according to claim 1, characterized in that it comprises two Redler chains accommodated in longitudinal channels arranged side by side, said chains being adapted to convey the material to a plurality of scrolls arranged transversely at a head of the tank truck and feeding said lifting scroll.

3. Tank truck according to one or more of the preceding claims, comprising bulkheads for dividing it into a plurality of chambers, characterized in that the at least one longitudinal channel for accommodating a Redler chain is provided, in an upward region, with a gate for each of said chambers.

4. Tank truck according to one or more of the preceding claims, characterized in that the at least one gate comprises a bar arranged at the longitudinal axis of the tank truck, two panels being hinged to said bar on opposite sides and being supported by guides at their free end, said bar being provided with means for moving in a direction orthogonal to the plane of the supporting chassis of the tank between a lower stroke limit position, in which the panels fully block the access of the material to the at least one channel for accommodating a Redler chain, and an upper stroke limit position, in which said panels leave an opening for the passage of the material into said channel.
